(19) Europäisches Patentamt / European Patent Office / Office européen des brevets

(11) **EP 4 449 890 A1**

(12) **EUROPEAN PATENT APPLICATION**

(43) Date of publication:
**23.10.2024 Bulletin 2024/43**

(21) Application number: **23168908.4**

(22) Date of filing: **20.04.2023**

(51) International Patent Classification (IPC):
**A23P 20/20** (2016.01)     **A23P 30/20** (2016.01)
**B33Y 30/00** (2015.01)

(52) Cooperative Patent Classification (CPC):
**A23P 30/20; A23P 20/20; B33Y 30/00;**
A23P 2020/253

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Revo Foods GmbH**
**1080 Wien (AT)**

(72) Inventors:
• **Simsa, Robin**
**1070 Wien (AT)**
• **Lachmayr, Manuel**
**1020 Wien (AT)**

(74) Representative: **Schwarz & Partner Patentanwälte GmbH**
**Patentanwälte**
**Wipplingerstraße 30**
**1010 Wien (AT)**

(54) **FEEDING DEVICE FOR FEEDING IN PARTICULAR RAW, PLANT-BASED FOODSTUFF MATERIAL TO A 3D PRINTER**

(57)    Feeding device (1) for feeding in particular raw, plant-based foodstuff material to a 3D printer (2), comprising a conveyor screw barrel (3) with a material inlet (4) and a material outlet (5), and a conveyor screw (6) disposed within the conveyor screw barrel (3), wherein at least a section of the conveyor screw (6) is located between the material inlet (4) and the material outlet (5), and a drive unit connected to the conveyor screw (6), wherein the conveyor screw (6) comprises a conical shape between the material inlet (4) and the material outlet (5).

Fig. 1

EP 4 449 890 A1

**Description**

The present invention relates to a feeding device for feeding in particular raw, plant-based foodstuff material to a 3D printer, a 3D printing system for the preferably additive manufacturing of food products, and a method for the production of food products this 3D printing system.

The development of environmentally friendly food alternatives to animal proteins is of considerable importance as climate change, overpopulation, massive meat production and overfishing destroy natural ecosystems. Additive manufacturing is not only a potential application for the hard tech industry like automotive, aerospace and robotics, but it is also a feasible alternative to produce plant-based seafood and meat, as it can easily recreate the texture and the mouthfeel of animal products.

Although meat alternatives like tofu, tempeh or seitan have been present for many years, new animal protein alternatives with similar sensory properties have been developed thanks to the extensive research that is present nowadays. Plant-based meat alternatives are becoming increasingly popular, which is reflected in the increasing sales of meat substitutes in recent years. Since 2010, average growth of more than 8% per year is forecast in Europe, and more than 20% from 2021 onwards. Nevertheless, there are not so many sustainable alternatives to produce seafood alternatives.

Furthermore, the amount of heavy metals, pesticides, microplastics, PCBs, antibiotics and other harmful substances in fish meat is constantly increasing. This leads to a health risk for consumers, especially when eating raw fish products like sushi or smoked salmon. The occurrence of parasites, bacteria, and viruses in fish, which is particularly important in uncooked food like in sushi is responsible for thousands of hospitalizations worldwide every year.

Therefore, to appeal to consumers with sustainable plant protein-based meat products, it is important to reproduce the sensory characteristics of meat as accurately as possible. Known products rely either on non-textured products, e.g. fish sticks or untextured products, which are mostly produced using conventional extrusion processes. However, the use of conventional extrusion processes for shaping and restructuring food ingredients to a final product is too coarse and imprecise for complex and structurally heterogeneous or high-value products such as salmon fillets or tuna steaks. Furthermore, conventional extruders do not sufficiently remove air bubbles from foodstuff material during the extrusion process, leading to insufficient homogeneity of the final product. Therefore, fully textured plant-based meat products such as salmon fillets and 3D printing technology for their production are not yet available.

It is an object of the present invention to provide a feeding device for feeding in particular raw, plant-based foodstuff material to a 3D printer, in order to print fully textured plant-based meat products which provides a homogeneous material to the 3D printer without air inclusions.

This is achieved by the provision of a feeding device for feeding in particular raw, plant-based foodstuff material to a 3D printer, comprising a conveyor screw barrel with a material inlet and a material outlet, and a conveyor screw disposed within the conveyor screw barrel, wherein at least a section of the conveyor screw is located between the material inlet and the material outlet, and a drive unit connected to the conveyor screw. According to the invention, the conveyor screw comprises a conical shape between the material inlet and the material outlet.

The feeding device according to the invention allows the transportation of raw material, especially raw food material like plant-based proteins, which have a viscosity of 3000 Pas to 18000 Pas to a 3D printer. The conical shape of the conveyor screw enables the transportation and mixing of the raw material at the same time, while maintaining the quality of the foodstuff material by removing enclosed air in the foodstuff material during the extrusion process.

According to a preferred embodiment of the feeding device according to the invention, the feeding device comprises a constant gap between the conveyor screw barrel and the conveyor screw between the material inlet and the material outlet. This guarantees, that nowhere in the feeding device the pressure and temperature exceed a certain threshold, which could lead to a reduced quality of the foodstuff material. Furthermore, for this purpose it is preferable, that the conveyor screw comprises a feed section in an area of the material inlet and a metering section in an area of the material outlet, wherein a channel depth of the conveyor screw in the feed section is essentially identical to the channel depth of the conveyor screw in the metering section.

Preferably, an outside diameter of the conveyor screw is at any point along the conveyor screw within the flighted length of the conveyor screw one sixth of a length measured from an end of the flighted length of the conveyor screw along the flighted length of the conveyor screw. This configuration has been proven to be particularly effective in transporting plant-based material through the feeding device.

According to a preferred embodiment of the feeding device the conveyor screw is a single flighted screw and comprises a crescent-cut cross-sectional profile. This is in particular advantageous when using plant-based materials with lower viscosities, like 3000 Pas to 8000 Pas. Furthermore, for this purpose it is preferrable that in an area of the material outlet, a free cross-section surface of the cross-sectional profile, which is defined as a ratio of a full circle cross-sectional surface area of the conveyor screw to an actual cross-sectional surface area of the conveyor screw, is a maximum of 1.5. This increases the throughput and efficiency of the feeding device according to the invention. The free cross-section surface of the conveyor crew in an area of the material inlet is furthermore preferably four times higher than in the area of the material outlet.

According to another advantageous embodiment of the feeding device according to the invention, the conveyor screw comprises a varying pitch angle. Preferably, a ratio of the pitch angle in an area of the material inlet compared to the pitch angle in an area of the material outlet is 0,6:1. According to the preferred embodiment, the pitch angle $\gamma$ is defined as

$$\gamma = \tan^{-1}\left(\frac{t_s}{\pi D}\right)$$

wherein $t_s$ is defined as the pitch, and D is defined as the external diameter of the conveyor screw. This may be implemented to simultaneously achieve conveying of material, pressure build-up and uniform controllable flow.

Preferably, the conveyor screw barrel comprises a rifling on an inner surface of the conveyor screw barrel. This increases the intermixing of the plant-based foodstuff material when being transported through the feeding device. The feeding device may also comprise a barrel housing, wherein the conveyor screw barrel is removably connected to the barrel housing. This enables the removal of the conveyor screw barrel, and thereby the adaptation of the feeding device to different foodstuff material by replacing the conveyor screw and the conveyor screw barrel.

According to an alternative embodiment of the feeding device according to the invention, the conical shape of the conveyor screw is narrowing from the material inlet to the material outlet. Hereby the feeding device can be configured to convey material with a high viscosity of 8000 Pas to 18000 Pas. Alternatively, the conical shape of the conveyor screw may be widening from the material inlet to the material outlet, in order to configure the feeding device according to the invention for material with a low viscosity of 3000 Pas to 8000 Pas.

The technical problem of the present invention is also solved by the provision of a 3D printing system according to the invention for the preferably additive manufacturing of food products, comprising a feeding device according to the invention and 3D printer connected to the material outlet of the feeding device, wherein the 3D printing system comprises a removable connection between the 3D printer and the feeding device. Hereby different 3D printery may be used in conjunction with the feeding device according to the invention.

Furthermore, the objective technical problem is solved by a method for the production of food products according to the invention with such a 3D printing system. The method according to the invention comprises the steps

- Introducing in particular raw, plant-based foodstuff material to the material inlet of the feeding device, wherein the foodstuff material has a viscosity of 3000 Pas to 18000 Pas;
- Conveying the material with the conveyor screw to the material outlet and into the 3D printer,
- Printing a food product with the 3D printer.

According to a preferred embodiment of the method according to the invention, the method comprises introducing in particular raw, plant-based foodstuff material to the material inlet of the feeding device, wherein the foodstuff material has a viscosity of 3000 Pas to 8000 Pas, and wherein the 3D printing system comprises a feeding device with a conveyor screw with a varying pitch angle. Preferably a ratio of the pitch angle in an area of the material inlet compared to the pitch angle in an area of the material outlet is 0,6:1, and the pitch angle $\gamma$ may be defined as

$$\gamma = \tan^{-1}\left(\frac{t_s}{\pi D}\right)$$

wherein $t_s$ is defined as the pitch, and D is defined as the external diameter of the conveyor screw.

The method according to the invention may also comprise introducing in particular raw, plant-based foodstuff material to the material inlet of the feeding device, wherein the foodstuff material has a viscosity of 8000 Pas to 18000 Pas, and wherein the 3D printing system comprises a feeding device according to the invention, wherein the conical shape of the conveyor screw is narrowing from the material inlet to the material outlet, and preferably with a conveyor screw with a variable pitch angle.

Alternatively, the method according to the invention may also comprise introducing in particular raw, plant-based foodstuff material to the material inlet of the feeding device, wherein the foodstuff material has a viscosity of 3000 Pas to 8000 Pas, and wherein the 3D printing system comprises a feeding device according to the invention, where the conical shape of the conveyor screw is widening from the material inlet to the material outlet.

Preferred and alternative embodiments of the feeding device, the 3D printing system, and the method according to the invention will hereinbelow be described with reference to the figures.

Figure 1 shows a 3d printing system according to the invention with a feeding device and a 3D printer in a first embodiment.

Figure 2 shows an alternative embodiment of the 3d printing system according to the invention.

Figure 3 shows an inner surface of a screw barrel of the feeding device according to the invention with a rifling.

Figure 4 shows the screw barrel of figure 3 in a cross section.

Figure 5 shows the 3D printing system according to the invention in a perspective view.

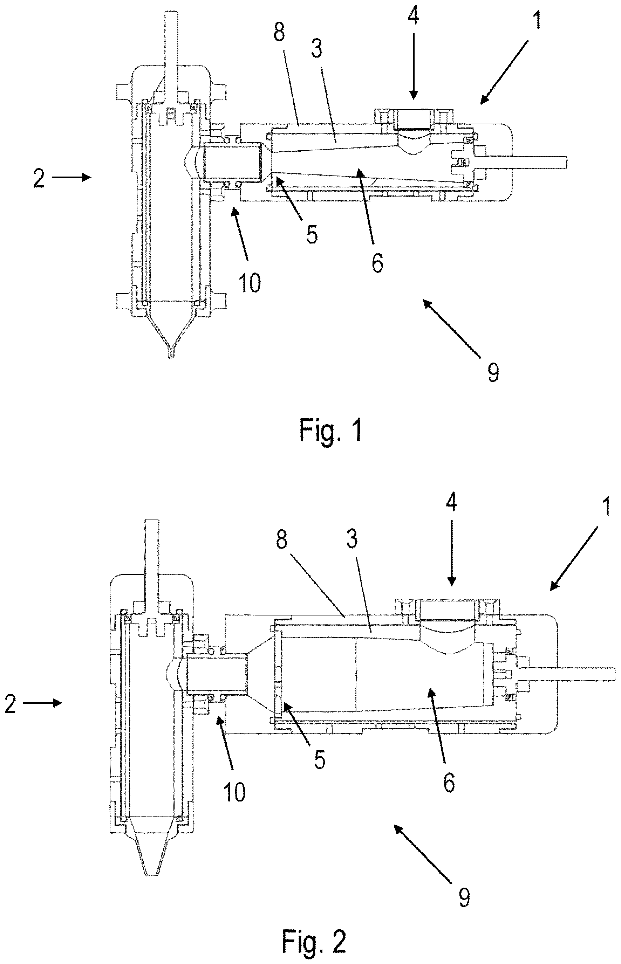

Figure 1 shows a cross section through a feeding device 1 according to the invention for feeding in particular raw, plant-based foodstuff material to a 3D printer 2, which is also shown in figure 1. The feeding device 1 comprises a conveyor screw barrel 3 with a material inlet 4 and a material outlet 5, and a conveyor screw 6, which is disposed within the conveyor screw barrel 3. According to the invention, at least a section of the conveyor screw 6 is located between the material inlet 4 and the material outlet 5, and a drive unit is connected to the conveyor screw 6. In Figure 1 and figure 2 the drive unit is not shown. The conveyor screw 5 comprises, as can be seen in figure 1 and figure 2 a conical shape between the material inlet 4 and the material outlet 5. The feeding device 1 according to the invention allows the transportation of raw material, especially raw food material like chocolate or plant-based proteins, which have a viscosity of 3000 Pas to 18000 Pas to the 3D printer 2. The conical shape of the conveyor screw 6 enables the transportation and mixing of the raw material at the same time, while maintaining the quality of the foodstuff material by removing air bubbles in the foodstuff material. The air bubbles are transported back in direction, and out through the material inlet 4 due to increasing pressures in the feeding device 1 in the region of the material outlet 5.

The installation of the feeding device 1 according to the invention allows the transportation of the raw material, especially raw food material like plant-based proteins to the 3D printer 2. The feeding device 1 also enables the transportation and mixing of the raw material at the same time. The material outlet 5 is, preferably fluidly, connected to the conveyor screw barrel 3 to transport the material to the material outlet 5, which is connected or connectable to the at least one 3D printer 2.

The material is drawn from the material inlet 4 into the conveyor screw barrel 3. The conveyor screw 6 is coupled to at least one drive unit or actuator that can be controlled to drive the conveyor screw 6 in clockwise or anti-clockwise directions and different speeds. The conveyor screw 6 can transport materials for 3D printing food with different viscosities. The viscosities suitable for 3D-printed food materials can range from 3000 Pas to 18000 Pas.

The conical shape of the conveyor screw 6 may be narrowing from the material inlet 4 to the material outlet 5, preferably for conveying foodstuff material of high viscosity from 8000 Pas to 18000 Pas, as shown in figure 1 and may alternatively be widening from the material inlet 4 to the material outlet 5 as shown in figure 2 preferably for conveying foodstuff material of low viscosity from 3000 Pas to 8000 Pas.

Preferably, the feeding device 1 also comprises a constant gap between the conveyor screw barrel 3 and the conveyor screw 6, between the material inlet 4 and the material outlet 5 in order to guarantee stable pressures and temperatures within the feeding device 1. Furthermore, for this purpose it is preferable, that the conveyor screw 6 comprises a feed section in an area of the material inlet 4 and a metering section in an area of the material outlet 5, wherein a channel depth of the conveyor screw 6 in the feed section is essentially identical to the channel depth of the conveyor screw 6 in the metering section.

Preferably, an outside diameter of the conveyor screw 6 is at any point along the conveyor screw 6 within a flighted length of the conveyor screw one sixth of a length measured from an end of the flighted length of the conveyor screw 6 along the flighted length of the conveyor screw 6. According to this embodiment, the conveyor screw 6 for delivering food material for 3D printing production has therefore a length-diameter ratio LID of 6:1, where LID is defined as follows:

$$\frac{L}{D} = \frac{\text{Screw flighted length}}{\text{Screw outside diameter}}$$

The conveyor screw 6 may also be a single flighted screw and may comprise a varying pith angle. In contrast to conventional screws, tapered, conical conveyor screws 6 as used in the invention with preferably a standard single flight pitch but varying pitch angle, can achieve both high upstream thread height to effectively convey material in a horizontal configuration. Preferably, the conveyor screw 6 may also comprise a crescent-cut cross-sectional end profile to produce incremental and controllable flow into the extruder as the screw rotates. The compression ratio of the conveyor screw 6 is preferably 1: 1, to eliminate air pockets that are present in the food material for 3D printing.

The compression ratio CR of the feeding device 1 according to the invention is defined as follows:

$$CR = \frac{\text{Channel depth in feed section}}{\text{Channel depth in metering section}}$$

The conveyor screw 6 has a tapered, conical profile depending on the viscosity of the 3D printed material; a greater upstream conveyor screw diameter compared to downstream conveyor screw diameter is suitable for high viscosities, and vice versa for low viscosity materials. The ratio of diameters between the material inlet 4 of the 3D printed material and the material outlet 4 is different depending on the viscosity of the material. For lower viscosities like 3000 Pas to 8000 Pas, the ratios range from 1:1 to 2:1 while for higher viscosities like 8000 Pas to 18000 Pas, the ratios range from 0.5:1 to 1:1.

For example, for lower viscosities, the crescent-cut cross-sectional end profile may be designed in such a way that in an area of the material outlet 5, a free cross-section surface of the cross-sectional profile, which is defined as a ratio of a full circle cross-sectional surface area of the conveyor screw to an actual cross-sectional surface area of the conveyor screw 6, is a maximum of 1.5.

$$\text{Free crosssection surface (c)} = \frac{\text{FullCircle Surface Area of End Profile}}{\text{Actual Surface Area of End Profile}} \leq 1.5$$

The free cross-section surface of the conveyor screw 6 in an area of the material inlet 5 may be chosen four times higher than in the area of the material outlet 4. Therefore, the ratio of free cross-section surface of upstream to downstream profile is 4: 1. Hereby the dwell time of the foodstuff material inside the conveyor screw barrel is increased, enabling an increased removal of air bubbles from the material.

According to the preferred embodiment of the feeding device 1 according to the invention, the conical shape of the conveyor screw 6 is designed to deliver the right flow of material at the optimal pressure. Continuous and precise feed rates are essential to obtain the desired quality while 3D printing. The flow inside the conveyor screw Q is measured as follows:

$$Q \;=\; \frac{1}{2} x\, \pi^2 \; x\, D_s^2 \; x\, N \; x\, H_{cd} \; x\, \sin\beta \; x\, \cos\beta$$

$D_s$ = screw diameter
N = screw speed
$H_{cd}$ = channel speed
β = helix angle

For low viscosities like 3000 Pas to 8000 Pas of the foodstuff material, preferably a conveyor screw 6 with standard single flight pitch but varying pitch angle γ is implemented to simultaneously achieve conveying of material, pressure build-up and uniform controllable flow. The upstream-downstream pitch angle ratio may be chosen as 0,6: 1. Therefore a ratio of the pitch angle γ in an area of the material inlet 4 compared to the pitch angle γ in an area of the material outlet 5 is according to a preferred embodiment of the feeding device 0,6:1.

The pitch angle γ may be defined as follows:

$$\gamma = \tan^{-1}\left(\frac{t_s}{\pi D}\right)$$

Where:

γ = pitch angle
$t_s$ = pitch
D = screw external diameter

For higher viscosities like 8000 Pas to 18000 Pas of the foodstuff material, a conveyor screw 6 with variable pitch angle γ may be implemented to achieve uniform withdrawal of bulk material from a hopper connected to the material inlet 4. This, in conjunction with the conical shape of the conveyor screw 6 tapering from smaller to larger screw diameter, provides a large channel depth in the feed section to convey large volumes of material, which then transitions to a reduced channel depth in the metering section to build pressure within the material.

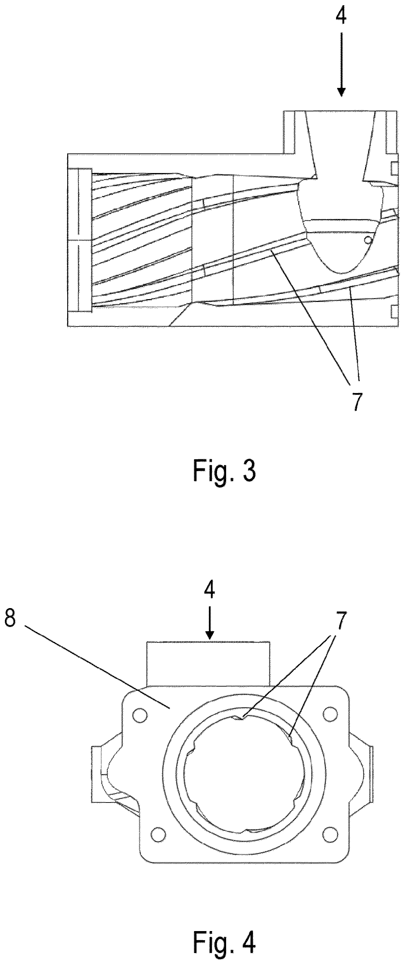

As shown in figure 3 and figure 4, according to a preferred embodiment of the feeding device 1 according to the invention, the screw barrel 6 may comprise a rifling 7 on an inner surface of the screw barrel 6. The rifling 7 increases the transportability of the material inside the feeding device 1. In particular the transportation of filaments in the material is increased. The feeding device 1 may also comprise a barrel housing 8, shown in figures 1, 2 and 4, wherein the screw barrel 6 is removably connected to the barrel housing 8. By removing the conveyor screw barrel 6 from the barrel housing 8, the shape of the conveyor screw barrel 3 can be changed to accommodate different conveyor screws 6, and to adapt the feeding device 1 to different applications and different foodstuff material.

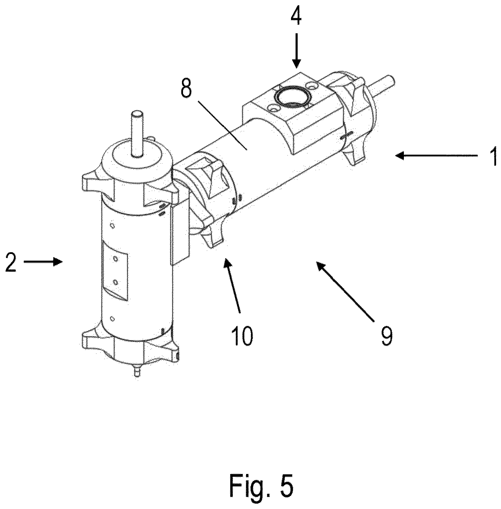

The feeding device 1 according to the invention can be implemented in a 3D printing system 9 for the preferably additive manufacturing of food products, comprising the feeding device 1 and a 3D printer 2 connected to the material outlet 5 of the feeding device 1. Such a 3D printing system 9 is shown in figure 5 in a perspective view, and in figures 1 and 2 in a cutaway, side view. The 3D printing system 9 according to the invention comprises a removable connection 10 between the 3D printer 2 and the feeding device 1. This removable connection 10 can be seen in figures 1 and 2 any may for example comprise a bayonet-style fastener, a milk pipe type fastener or a TC-fastener. Preferably the connection 10 may also comprise one or more gaskets. The removable connection 10 enables an easy cleaning procedure, and also enables an easy adaptation of the 3D printing system 9 to different 3D printers 2.

The 3D printing system 9 according to the invention can be used in a method for the production of food products. In this method according to the invention in particular raw, plant-based foodstuff material is introduced into the material inlet 4 of the feeding device 1. The foodstuff material has a viscosity of 3000 Pas to 18000 Pas. The foodstuff material is then conveyed with the conveyor screw 6 to the material outlet 5 and into the 3D printer 2, and a food product is printed with the 3D printer 2.

According to a preferred embodiment of the method according to the invention, the method comprises introducing in particular raw, plant-based foodstuff material to the material inlet 4 of the feeding device 1, wherein the foodstuff material has a viscosity of 3000 Pas to 8000 Pas, and wherein the 3D printing system 9 comprises a feeding device 1 with a conveyor screw 6 with a varying pitch angle $\gamma$. Preferably a ratio of the pitch angle $\gamma$ in an area of the material inlet 4 compared to the pitch angle $\gamma$ in an area of the material outlet 5 is 0,6: 1, and the pitch angle $\gamma$ may be defined as

$$\gamma = \tan^{-1}\left(\frac{t_s}{\pi D}\right)$$

wherein $t_s$ is defined as the pitch, and D is defined as the external diameter of the conveyor screw 6.

The method according to the invention may also comprise introducing in particular raw, plant-based foodstuff material to the material inlet 4 of the feeding device 1, wherein the foodstuff material has a viscosity of 8000 Pas to 18000 Pas, and wherein the 3D printing system 9 comprises a feeding device 1 according to the invention, wherein the conical shape of the conveyor screw 6 is narrowing from the material inlet 4 to the material outlet 5, and preferably with a conveyor screw 6 with a variable pitch angle $\gamma$.

Alternatively, the method according to the invention may also comprise introducing in particular raw, plant-based foodstuff material to the material inlet 4 of the feeding device 1, wherein the foodstuff material has a viscosity of 3000 Pas to 8000 Pas, and wherein the 3D printing system 9 comprises a feeding device 1 according to the invention, where the conical shape of the conveyor screw 6 is widening from the material inlet 4 to the material outlet 5.

**Claims**

1. Feeding device (1) for feeding in particular raw, plant-based foodstuff material to a 3D printer (2), comprising a conveyor screw barrel (3) with a material inlet (4) and a material outlet (5), and a conveyor screw (6) disposed within the conveyor screw barrel (3), wherein at least a section of the conveyor screw (6) is located between the material inlet (4) and the material outlet (5), and a drive unit connected to the conveyor screw (6),
**characterized in that**
the conveyor screw (6) comprises a conical shape between the material inlet (4) and the material outlet (5).

2. Feeding device (1) according to claim 1, **characterized in that** the feeding device (1) comprises a constant gap between the conveyor screw barrel (3) and the conveyor screw (6) between the material inlet (4) and the material outlet (5).

3. Feeding device (1) according to any of claims 1 or 2, **characterized in that** an outside diameter of the conveyor screw (6) is at any point along the conveyor screw (6) within the flighted length of the conveyor screw (6) one sixth of a length measured from an end of the flighted length of the conveyor screw (6) along the flighted length of the conveyor screw (6).

4. Feeding device (1) according to any of claims 1 to 3, **characterized in that** the conveyor screw (6) comprises a feed section in an area of the material inlet (4) and a metering section in an area of the material outlet (5), wherein a channel depth of the conveyor screw (6) in the feed section is essentially identical to the channel depth of the conveyor screw (6) in the metering section.

5. Feeding device (1) according to claim 1, **characterized in that** the conveyor screw (6) is a single flighted screw and comprises a crescent-cut cross-sectional profile.

6. Feeding device (1) according to claim 5, **characterized in that** in an area of the material outlet (5), a free cross-section surface of the cross-sectional profile, which is defined as a ratio of a full circle cross-sectional surface area of the conveyor screw (6) to an actual cross-sectional surface area of the conveyor screw (6), is a maximum of 1.5.

7. Feeding device (1) according to claim 6, **characterized in that** the free cross-section surface of the conveyor crew (6) in an area of the material inlet (4) is four times higher than in an area of the material outlet (5).

8. Feeding device (1) according to any of claims 1 to 7, **characterized in that** the conveyor screw (6) comprises a varying pitch angle ($\gamma$).

9. Feeding device (1) according to claim 8, **characterized in that** a ratio of the pitch angle ($\gamma$) in an area of the material inlet (4) compared to the pitch angle ($\gamma$) in an area of the material outlet (5) is 0,6:1.

10. Feeding device (1) according to claim 8 or 9, **characterized in that** the pitch angle ($\gamma$) is defined as

$$\gamma = \tan^{-1}\left(\frac{t_s}{\pi D}\right)$$

wherein $t_s$ is defined as the pitch, and D is defined as the external diameter of the conveyor screw (6).

11. Feeding device (1) according to any of the claims 1 to 10, **characterized in that** the conveyor screw barrel (3) comprises a rifling (7) on an inner surface of the conveyor screw barrel (3).

12. Feeding device (1) according to any of claims 1 to 11, **characterized in that** the feeding device (1) comprises a barrel housing (8), and that the conveyor screw barrel (3) is removably connected to the barrel housing (8).

13. Feeding device (1) according to any of claims 1 to 12, **characterized in that**, the conical shape of the conveyor screw (6) is narrowing from the material inlet (4) to the material outlet (5).

14. Feeding device (1) according to any of claims 1 to 12, **characterized in that**, the conical shape of the conveyor screw (6) is widening from the material inlet (4) to the material outlet (5).

15. 3D printing system (9) for the preferably additive manufacturing of food products, comprising a feeding device (1) according to any of claims 1 to 14, and a 3D printer (2) connected to the material outlet (5) of the feeding device (1), **characterized in that** the 3D printing system (9) comprises a removable connection (10) between the 3D printer (2) and the feeding device (1).

16. Method for the production of food products with a 3D printing system (9) according to claim 15, **characterized in that** the method comprises

    - Introducing in particular raw, plant-based foodstuff material to the material inlet (4) of the feeding device (1), wherein the foodstuff material has a viscosity of 3000 Pas to 18000 Pas, wherein when the foodstuff material has a viscosity of 3000 Pas to 8000 Pas, the 3D printing system (9) preferably comprises a feeding device (1) according to claim 10 or according to claim 14, and wherein when the foodstuff material has a viscosity of 8000 Pas to 18000 Pas, the 3D printing system (9) preferably comprises a feeding device (1) according to claim 13, preferably with a conveyor screw (6) with a variable pitch angle ($\gamma$);

- Conveying the material with the conveyor screw (6) to the material outlet (5) and into the 3D printer (2),
- Printing a food product with the 3D printer (2);

Fig. 1

Fig. 2

Fig. 3

Fig. 4

Fig. 5

Europäisches
Patentamt
European
Patent Office
Office européen
des brevets

# EUROPEAN SEARCH REPORT

**Application Number**

EP 23 16 8908

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 20 2021 105576 U1 (SHENZHEN XINGQILING FOOD TECH CO LTD [CN]) 26 October 2021 (2021-10-26) * paragraph [0015] – paragraph [0019]; claim 1; figure 1 * * paragraph [0011] * | 1,12,13, 15,16 | INV. A23P20/20 A23P30/20 B33Y30/00 |
| X A | US 2017/291364 A1 (WOMER TIMOTHY W [US]) 12 October 2017 (2017-10-12) * paragraph [0054] – paragraph [0057]; figure 1 * * paragraph [0063] – paragraph [0069]; claims 1-3; figures 4A, 7A, 8 * | 1-4,8, 11-13,15 5-7,9, 10,14 | |
| X | WO 2019/141606 A1 (UNIV GENT [BE]) 25 July 2019 (2019-07-25) * page 20, line 21 – page 22, line 13; claim 1; figures 1, 1A, 8-10 * * page 27, line 25 – page 28, line 20 * | 1-3, 5-10,12, 13,15 | |
| A | WO 2020/136383 A1 (KRAFT FOODS SCHWEIZ HOLDING GMBH [CH]) 2 July 2020 (2020-07-02) * page 17, line 13 – page 18, line 16; claims 1,2,6-8; figure 1 * | 1-16 | TECHNICAL FIELDS SEARCHED (IPC) A23P B33Y |
| A | EP 3 626 439 A1 (TRIASTEK INC [CN]) 25 March 2020 (2020-03-25) * paragraph [0115] – paragraph [0119]; figure 1 * * paragraph [0197] * | 1-16 | |
| A | WO 2014/190217 A1 (SYSTEMS AND MATERIALS RES CORP [US]) 27 November 2014 (2014-11-27) * paragraph [0016] – paragraph [0018]; claims 1,5; figure 1 * | 1,15,16 | |

The present search report has been drawn up for all claims

| Place of search | Date of completion of the search | Examiner |
|---|---|---|
| Munich | 22 September 2023 | Gaiser, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 8908

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2023

| Patent document cited in search report | Publication date | Patent family member(s) | | Publication date |
|---|---|---|---|---|
| DE 202021105576 U1 | 26-10-2021 | CN | 215992712 U | 11-03-2022 |
| | | DE 202021105576 U1 | | 26-10-2021 |
| US 2017291364 A1 | 12-10-2017 | NONE | | |
| WO 2019141606 A1 | 25-07-2019 | CN | 111601695 A | 28-08-2020 |
| | | EP | 3740369 A1 | 25-11-2020 |
| | | US | 2020338824 A1 | 29-10-2020 |
| | | WO | 2019141606 A1 | 25-07-2019 |
| WO 2020136383 A1 | 02-07-2020 | AU | 2018454921 A1 | 29-07-2021 |
| | | CA | 3122222 A1 | 02-07-2020 |
| | | CN | 113163791 A | 23-07-2021 |
| | | EP | 3902405 A1 | 03-11-2021 |
| | | WO | 2020136383 A1 | 02-07-2020 |
| EP 3626439 A1 | 25-03-2020 | AU | 2018267821 A1 | 07-11-2019 |
| | | CA | 3063797 A1 | 09-12-2019 |
| | | CN | 109311232 A | 05-02-2019 |
| | | CN | 114290669 A | 08-04-2022 |
| | | CN | 114311659 A | 12-04-2022 |
| | | EP | 3626439 A1 | 25-03-2020 |
| | | JP | 7174432 B2 | 17-11-2022 |
| | | JP | 2020524092 A | 13-08-2020 |
| | | JP | 2022177311 A | 30-11-2022 |
| | | KR | 20200007860 A | 22-01-2020 |
| | | US | 2021154910 A1 | 27-05-2021 |
| | | US | 2022339857 A1 | 27-10-2022 |
| | | WO | 2018210183 A1 | 22-11-2018 |
| WO 2014190217 A1 | 27-11-2014 | US | 2016106142 A1 | 21-04-2016 |
| | | WO | 2014190217 A1 | 27-11-2014 |

EPO FORM P0459

For more details about this annex : see Official Journal of the European Patent Office, No. 12/82